# EUROPÄISCHE PATENTANMELDUNG

(11) **EP 3 457 306 A1**
(43) Veröffentlichungstag der Anmeldung: **20.03.2019**
(21) Anmeldenummer: 17191584.6
(22) Anmeldetag: 18.09.2017
(51) Int. Cl.: G06F 21/31, H04L 29/06, G06F 21/46

(54) **VERFAHREN ZUR ZUGRIFFSVERWALTUNG ZU EINER EINRICHTUNG UND ZUGRIFFSYSTEM**

(71) Anmelder: Siemens Aktiengesellschaft, 80333 München (DE)
(72) Erfinder: Bußer, Jens-Uwe, 85579 Neubiberg (DE)

(57) **Zusammenfassung**

Ein Verfahren zur Zugriffsverwaltung zu einer Einrichtung (2), welche eine erste und eine zweite Eingabeschnittstelle (3, 4) jeweils zum Einkoppeln einer Zeichenfolge (ZF1, ZF2) aufweist, umfasst die Schritte: Erzeugen (S1) eines Passworts (PW) mit einer vorgegebenen Mindestanzahl von Zeichen (Z1 - Z8) und mit einem Komplexitätsmaß; Erzeugen (S2) eines Subpassworts (SPW) in Abhängigkeit von dem erzeugten Passwort (PW) und einer vorgegebenen Abbildungsvorschrift (AV), wobei das Subpasswort (SPW) ein geringeres Komplexitätsmaß hat als das Passwort (PW); und Freigeben (S6) eines Zugriffs auf die Einrichtung (2), falls eine über die erste Eingabeschnittstelle (3) eingekoppelte (S3) Zeichenfolge (ZF1) dem Passwort (PW) entspricht oder eine über die zweite Eingabeschnittstelle (4) eingekoppelte (S3) Zeichenfolge (ZF2) dem Subpasswort (SPW) entspricht.

Das Verfahren und ein entsprechendes Zugriffssystem (1) für eine Einrichtung (2) erlaubt eine einfache Handhabung der Passwortverwaltung durch den jeweiligen Benutzer.

## Beschreibung

Die vorliegende Erfindung betrifft ein Verfahren zur Zugriffsverwaltung zu einer Einrichtung sowie ein Zugriffssystem. Die Zugriffsverwaltung erfolgt beispielsweise in der Art eines Verfahrens zum Erzeugen von Passwörtern und der Überprüfung von eingegebenen Passwörtern. Ein Zugriffssystem wird beispielsweise einer Einrichtung zugeordnet oder in diese integriert.

In der Vergangenheit wurden mechanische Zugriffe auf Einrichtungen durch mechanische Schlösser geschützt. Das Schloss kann dabei als eine Schnittstelle verstanden werden, die mit Hilfe eines Schlüssels geöffnet wird und so den Zugriff auf die dahinterliegende Vorrichtung ermöglicht. Bei klassischen mechanischen Schlüsseln und Schlössern bestand der Schlüssel aus einem physikalischen Gegenstand, den es zu schützen galt. In der Folge sind mechanische Schlösser auch durch Zahlenkombinationen als Schlüssel ausgestattet worden, beispielsweise bei Tresoren.

Auch heutige Einrichtungen, die häufig computerbasiert sind und neben einem direkten physikalischen Zugriff auch aus der Ferne erreichbar sind, beispielsweise über ein Netzwerk, verfügen über Schnittstellen, die einen Zugriff ermöglichen oder verhindern. Bekannt ist beispielsweise, den Zugang durch ein Kennwort oder eine persönliche Identifizierungsnummer (PIN) zu gewähren oder bei Falscheingabe abzulehnen. Um eine ausreichende Sicherheit zu gewährleisten, werden an die verwendeten Passwörter bestimmte Komplexitätsanforderungen gesetzt. Beispielsweise sollten Passwörter eine bestimmte Mindestzeichenlänge haben oder der Raum möglicher Zeichen möglichst groß sein, wodurch die Entropie erhöht wird.

Beim Benutzer, der ein solches Passwort zugewiesen erhält, ergibt sich häufig das Problem der sicheren Abspeicherung. Je länger und komplexer das Passwort ist, desto schwieriger lässt es sich vom menschlichen Benutzer merken und korrekt eingeben. Dies ist besonders nachteilig, wenn beispielsweise eine lokale Schnittstelle die direkte Eingabe des Passwortes über ein Eingabeterminal oder eine Tastatur erforderlich macht. Bei einem Zugriff auf eine Einrichtung über ein Netzwerk, beispielsweise über eine Netzwerkschnittstelle, hingegen ist das sichere Abspeichern eines komplexen Passwortes durch den Nutzer mit Hilfe einer gesicherten Speichereinrichtung denkbar.

In der Vergangenheit wurden daher verschiedene unabhängige Passwörter für verschiedene Schnittstellen zu einer jeweiligen Einrichtung verwendet. Das Speichern oder Erinnern vieler verschiedener Passwörter wird jedoch häufig als unbequem empfunden.

Es ist daher eine Aufgabe der vorliegenden Erfindung, ein verbessertes Verfahren zur Zugriffsverwaltung bzw. ein Zugriffssystem zu schaffen.

Demgemäß wird ein Verfahren zur Zugriffsverwaltung zu einer Einrichtung vorgeschlagen, wobei die Einrichtung eine erste und eine zweite Eingabeschnittstelle jeweils zum Einkoppeln einer Zeichenfolge aufweist. Das Verfahren umfasst die Schritte:
Erzeugen eines Passwortes mit einer vorgegebenen Mindestanzahl von Zeichen;
Erzeugen eines Subpassworts in Abhängigkeit von dem erzeugten Passwort und einer vorgegebenen Abbildungsvorschrift, wobei das Subpasswort Zeichen aus einem kleineren Zeichensatz und/oder eine geringere Anzahl an Zeichen umfasst als das Passwort;
Freigeben eines Zugriffs auf die Einrichtung, falls eine über die erste Eingabeschnittstelle eingekoppelte Zeichenfolge dem Passwort entspricht oder eine über die zweite Eingabeschnittelle eingekoppelte Zeichenfolge dem Subpasswort entspricht.

Es ist insbesondere möglich, dass das Passwort ein vorgegebenes Komplexitätsmaß hat und das Subpasswort ein geringeres Komplexitätsmaß als das Passwort hat.

Es wird ferner ein Zugriffssystem für eine Einrichtung vorgeschlagen, welches umfasst:
eine erste Eingabeschnittstelle zum Einkoppeln einer Zeichenfolge für einen Fernzugriff auf die Einrichtung;
eine zweite Eingabeschnittstelle zum Einkoppeln einer Zeichenfolge für einen lokalen Zugriff auf die Einrichtung;
eine an die erste und zweite Eingabeschnittstelle gekoppelte Steuereinrichtung, welche eingerichtet ist, einen Zugriff auf die Einrichtung freizugeben oder zu blockieren.

Dabei wird ein Zugriff freigegeben, falls eine über die erste Eingabeschnittstelle eingekoppelte Zeichenfolge einem vorgegebenen Passwort entspricht oder eine über die zweite Eingabeschnittstelle gekoppelte Zeichenfolge einem vorgegebenen Subpasswort entspricht. Das Subpasswort hängt von dem Passwort und einer vorgegebenen Abbildungsvorschrift ab. Das Subpasswort hat insbesondere ein geringeres Komplexitätsmaß als das Passwort.

In Ausführungsformen ist das Zugriffssystem eingerichtet, ein Verfahren wie zuvor oder im Folgenden beschrieben durchzuführen. Dazu ist beispielsweise die Steuereinrichtung entsprechend ausgestaltet.

Bei der vorgeschlagenen Zugriffsverwaltung bzw. dem Zugriffssystem ist die Handhabung des Passworts bzw. Subpassworts für den Anwender oder Benutzer erleichtert. Beispielsweise lassen sich besonders lange Passwörter nur schwer merken und korrekt eingeben. Zudem ermöglicht das Verfahren bzw. das System den Einsatz von einfachen Eingabegeräten, beispielsweise mit nur wenig Tasten und einem kleinen Zeichensatz, in die komplexe lange Passwörter nur umständlich eingegeben werden können. Durch die Verwendung des Subpassworts, das insbesondere eindeutig aus dem Passwort ableitbar ist, kann eine erleichterte Bedienung erzielt werden.

Unter einem Zugriff auf eine Einrichtung wird insbesondere das Einräumen der Möglichkeit der bestimmungsgemäßen Benutzung der mit dem Zugriffssystem ausgestatteten Einrichtung verstanden. Einem Benutzer wird insofern der Zugriff derart gestattet, dass er nach Überwinden des Zugriffssystems, welches die entsprechende Freigabe erteilt, die Einrichtung bedienen, benutzen, verändern, betreiben oder aktivieren kann. Wird der Zugriff hingegen verweigert, ist dem Benutzer kein Betrieb gestattet oder die Einrichtung kann nicht oder nur eingeschränkt betrieben werden.

Man kann sagen, dass die Einrichtung grundsätzlich bestimmte Funktionen bereitstellt, die nur dann von einem Benutzer vollzogen, genutzt oder aktiviert werden können, wenn der Zugriff auf die Einrichtung oder auf die Funktion der Einrichtung gewährt wird. Man spricht insofern auch von einer Freigabe der Funktion.

In Ausführungsformen ist die erste Eingabeschnittstelle für einen Fernzugriff, insbesondere als eine Netzwerkschnittstelle, eingerichtet, und die zweite Eingabeschnittstelle ist für einen ausschließlich lokalen Zugang, insbesondere in der Art einer Tastaturschnittstelle, eingerichtet.

Zum Beispiel kann in Ausführungsformen die erste Eingabeschnittstelle eingerichtet sein, eine Authentifizierung des Anwenders mittels eines Authentifizierungsdienstes durchzuführen. Als Authentifizierungsdienst kann beispielsweise ein Kerberos-Dienst verwendet werden. Dabei fragt dann der Nutzer bei einem Kerberos-Authentifizierungsserver ein sogenanntes Ticket-Granting-Ticket (TGT) an. Zur Authentifizierung des Nutzers, welcher zum Beispiel als Client-Einrichtung verstanden werden kann, wird das Passwort eingesetzt. Mit Hilfe des TGTs kann der Nutzer dann bei einem Ticket-Granting-Server ein Dienst-Ticket für die Einrichtung oder bestimmte von ihr bereitgestellte Dienste erhalten. Mit diesem Dienst-Ticket wird dann die Freigabe bzw. der Zugriff auf die Einrichtung ermöglicht.

Es ist ferner denkbar, dass die zweite Eingabeschnittstelle eine manuelle Eingabeschnittstelle ist. Bei dieser Schnittstelle, die zum Beispiel in der Art einer Tastatur mit mehreren Tasten ausgestaltet werden kann, ist insbesondere die Eingabe des Subpassworts ermöglicht. Unter einer manuellen Schnittstelle kann eine Eingabemöglichkeit verstanden werden, die eine direkte Interaktion mit dem Benutzer erfordert. Eine manuelle Schnittstelle kann in Ausführungsformen eine Einkopplung von Zeichenfolgen aus der Ferne ausschließen. Denkbar sind haptische, akustische und/oder visuelle Mensch-Maschine-Schnittstellen als manuelle Eingabeschnittstelle.

In weiteren Ausführungsformen ist der ersten Eingabeschnittstelle eine erste Speichereinrichtung zum Speichern des Passworts zugeordnet, und der zweiten Eingabeschnittstelle ist eine zweite Speichereinrichtung zum Speichern des Subpassworts zugeordnet. Dabei sind die erste und die zweite Eingabeschnittstelle vorzugsweise räumlich voneinander getrennt angeordnet. Es ist ferner möglich, dass Speichern des Passworts und des Subpassworts unabhängig voneinander, insbesondere in verschlüsselter oder gehashter Form, erfolgen.

Das Passwort, welches auch als Netzwerkpasswort verstanden werden kann, kann alternativ in Klartext in der Einrichtung oder in einer der ersten Eingabeschnittstelle zugeordneten Speichereinrichtung gespeichert werden. Gemäß der Abbildungsvorschrift ist dann eine Erzeugung des Subpassworts daraus möglich.

Bei getrenntem voneinander Abspeichern des Passworts und des Subpassworts wird es einem Angreifer, der unbefugterweise in Kenntnis der Passwörter bzw. des Subpassworts kommen möchte, erschwert. Sollte ein Angreifer das Subpasswort für die zum Beispiel lokale Eingabeschnittstelle erkannt haben, ist damit dennoch nicht die direkte Rekonstruktion des Netzwerkpassworts möglich, weil beim Abbilden des Passworts auf das Subpasswort Informationen verloren gehen.

In Ausführungsformen ermöglichen die erste Eingabeschnittstelle und die zweite Eingabeschnittstelle für ein jeweiliges Paar aus einem Passwort und dem zugehörigen Subpasswort einen Zugriff auf dieselbe Funktion der Einrichtung. Es ist auch denkbar, dass bei einem Zugriff über die erste Eingabeschnittstelle mit dem Passwort ein anderer, insbesondere ein erweiterter Funktionsumfang der Einrichtung freigegeben wird im Vergleich zu einem Zugriff auf die Einrichtung über die zweite Eingabeschnittstelle und dem Subpasswort.

In Ausführungsformen besteht das Passwort aus Zeichen eines ersten Zeichensatzes und das Subpasswort besteht aus Zeichen eines zweiten Zeichensatzes. Der erste Zeichensatz umfasst dabei mehr Zeichen als der zweite Zeichensatz.

Dadurch wird erzielt, dass die Entropie eines zufälligen Passwortes größer ist als die Entropie eines Subpasswortes.

In Ausführungsformen der Abbildungsvorschrift werden mehrere Zeichen des ersten Zeichensatzes auf ein Zeichen des zweiten Zeichensatzes abgebildet. Dadurch wird die Verwendung des Subpassworts erleichtert, denn die zweite Eingabeschnittstelle kann aufwandsgünstiger, beispielsweise mit weniger zu erkennenden Zeichen ausgestaltet werden als die erste Eingabeschnittstelle.

In einer Variante der Abbildungsvorschrift berücksichtigt die Abbildungsvorschrift nur eine Auswahl von Zeichen des Passwortes. Insbesondere wird bei der Abbildungsvorschrift mindestens ein Zeichen am Anfang des Passwortes berücksichtigt. Für einen Anwender ist es intuitiver, bei der Eingabe eines Passwortes bzw. des zugehörigen Subpasswortes mit dem gleichen Zeichen zu beginnen.

In Ausführungsformen sind die Zeichen des Subpassworts eine Auswahl von Zeichen des Passwortes. In einer weiteren Variante enthält das Passwort Groß- und Kleinbuchstaben als Zeichen, und die Abbildungsvorschrift bildet Groß- und Kleinbuchstaben eines selben Buchstabens auf ein Zeichen des Subpasswortes ab. Dadurch ist die Handhabung weiter verbessert.

Es ist ferner denkbar, dass die Abbildungsvorschrift Groß- und Kleinbuchstaben eines selben Buchstabens auf ein Zeichen des Subpasswortes, vorzugsweise des Buchstabens, abbildet.

Insgesamt ermöglicht die vorgeschlagene Zugriffsverwaltung eine verbesserte Handhabung und einen erleichterten Zugriff insbesondere über die zweite Eingabeschnittstelle, die auch als lokale Schnittstelle bezeichnet werden kann.

Bei der ersten Schnittstelle handelt es sich insbesondere um eine Eingabeschnittstelle, die mit einem komplexeren Passwort umgehen kann. Beispielsweise ist dies eine Netzwerkschnittstelle, die von einem extern von der Einrichtung vorliegenden Client angesprochen werden kann.

Es ist einerseits möglich, mit einem komplexen sicheren Passwort eine Netzwerkanmeldung vorzunehmen und nach einer beispielsweise einfachen Regel in der Art der Abbildungsvorschrift ein einfaches kurzes Passwort für eine direkte lokale Anmeldung vorzunehmen. Der Benutzer hat somit zwei unterschiedliche Authentifizierungsverfahren mit einem einzigen zu speichernden oder zu merkenden Passwort zur Hand.

In Ausführungsformen erfordert die zweite Eingabeschnittstelle als lokale Schnittstelle einen physikalischen Zugang. Diese ist dadurch anders oder besser geschützt als die insbesondere als Netzwerkschnittstelle ausgeführte erste Eingabeschnittstelle. Eine Automatisierung des Zugriffs auf die zweite Eingabeschnittstelle durch einen Angreifer wird dadurch erschwert.

Die jeweilige Einheit oder Einrichtung, zum Beispiel die Eingabeschnittstelle oder die Steuerungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches auf einer programmgesteuerten Einrichtung, welche mit einem entsprechenden Zugriffssystem ausgestattet ist, die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für das vorgeschlagene Zugriffssystem beschriebenen Ausführungsformen und Merkmale gelten für das vorgeschlagene Verfahren zur Zugriffsverwaltung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein Ablaufdiagramm für ein Verfahren zur Zugriffsverwaltung gemäß einem Ausführungsbeispiel;
- Fig. 2: zeigt ein schematisches Blockdiagramm für ein Zugriffssystem gemäß einem Ausführungsbeispiel; und
- Fig. 3: zeigt eine schematische Darstellung zur Erläuterung einer Passworterzeugung gemäß einem Ausführungsbeispiel, und
- Fig. 4: zeigt ein Ausführungsbeispiel für eine lokale Schnittstelle.

In den Figuren sind gleiche oder funktionsgleiche Elemente mit denselben Bezugszeichen versehen worden, sofern nichts anderes angegeben ist.

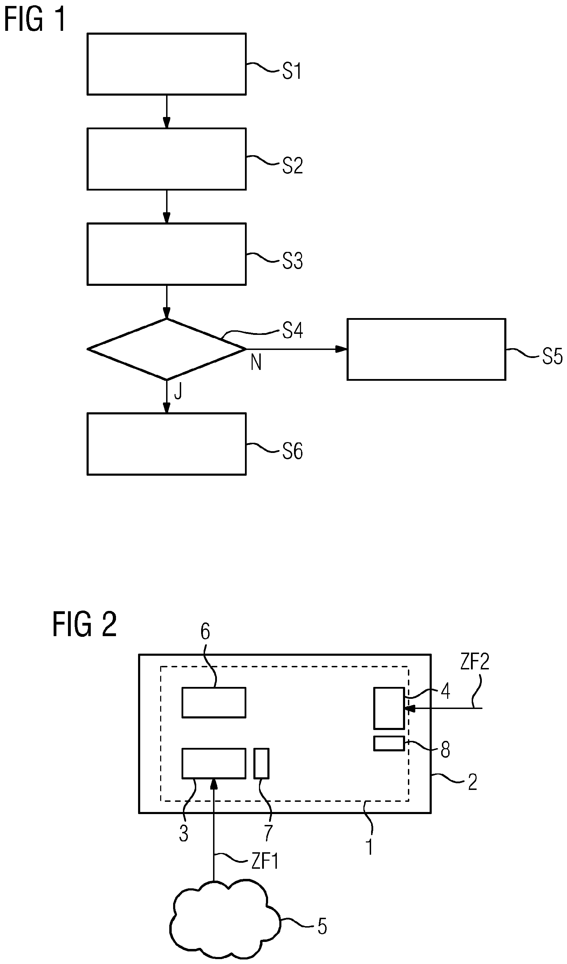

Anhand der Fig. 1 und 2 werden Ausführungsbeispiele und Varianten eines Verfahrens zur Zugriffsverwaltung auf eine Einrichtung mit Hilfe eines entsprechenden Zugriffssystems beschrieben. Die Fig. 1 zeigt dabei ein Ablaufdiagramm für ein Verfahren zur Zugriffsverwaltung, welches mit Hilfe des in Fig. 2 als schematisches Blockdiagramm dargestelltes Zugriffssystem durchgeführt werden kann.

Einem dem ersten Schritt S1 vorangehenden Schritt kann die Bereitstellung eines Zugriffssystems 1 vorangehen. Beispielsweise wird eine Einrichtung 2, wie sie in der Fig. 2 angedeutet ist, mit einem Zugriffssystem 1 ausgestattet. Unter der Einrichtung 2 kann beispielsweise ein allgemeines technisches System verstanden werden. Es ist auch denkbar, dass es sich um eine körperliche Einrichtung, wie eine Maschine oder ein Gerät, handelt. Die Einrichtung 2 kann insbesondere auch ein Computer oder Rechnersystem sein, das an ein Netzwerk gekoppelt ist.

Das Zugriffssystem 1 umfasst dabei eine erste Eingabeschnittstelle 3, die als Netzwerkschnittstelle ausgestaltet ist, und eine zweite Eingabeschnittstelle 4, welche als lokale Schnittstelle eingerichtet ist. Unter einer lokalen Schnittstelle wird verstanden, dass die räumliche und physische Anwesenheit eines Bedieners oder einer zusätzlichen Einrichtung erforderlich ist, um die lokale Schnittstelle 4 anzusprechen. Das Zugriffssystem 1 umfasst ferner eine Steuereinrichtung 6, die programmgesteuert sein kann und die Durchführung eines wie in der Fig. 1 und im Folgenden beschriebenen Verfahrens implementiert. Es sind ferner Speichereinrichtungen 7, 8, die jeweils den Schnittstellen 3, 4 zugeordnet sind, vorgesehen. Die Fig. 2 zeigt ferner symbolisch ein Netzwerk 5, beispielsweise eine Internet-Anbindung, über die die Netzwerkschnittstelle 3 erreichbar ist.

In einem ersten Schritt S1 wird ein Passwort PW, welches im Folgenden auch als Netzwerkpasswort bezeichnet ist, erzeugt. Das Passwort PW erfüllt vorgegebene Passwortanforderungen hinsichtlich seiner Komplexität. Dabei kann ein Komplexitätsmaß für das Passwort PW vorgegeben sein. Als Komplexitätsmaß kann zum Beispiel die Anzahl der unterschiedlichen Zeichen innerhalb des Passworts PW verwendet werden. Denkbar sind auch andere Komplexitätsmaße, die beispielsweise auf die Entropie eines zufälligen Passworts aus dem Raum möglicher Passworte abstellen.

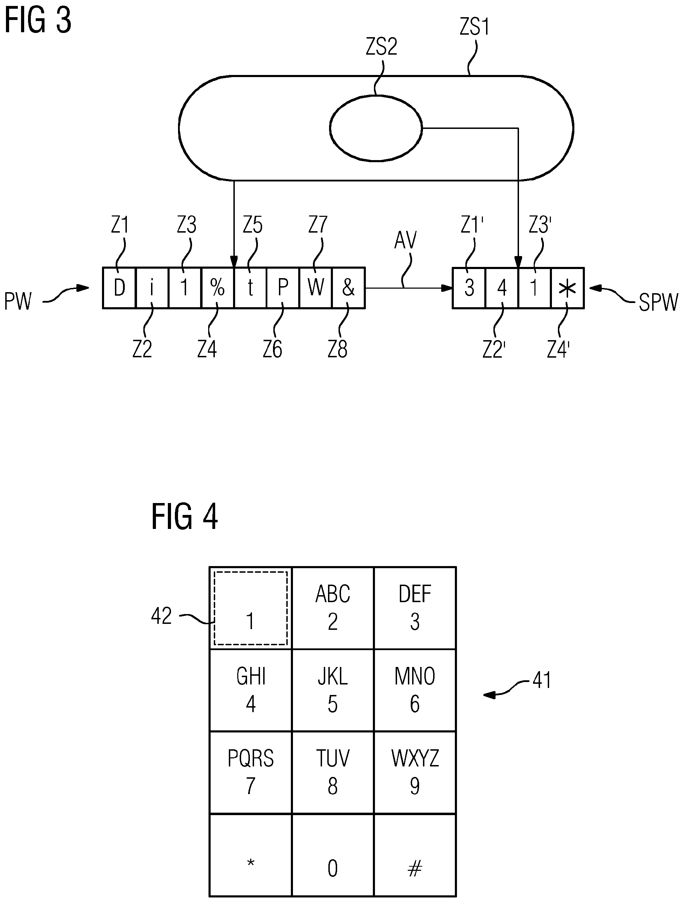

In der Fig. 3 ist beispielshaft ein Passwort PW aus acht Zeichen Z1 - Z8 dargestellt. Das Passwort Di1%tPW& folgt beispielsweise einer Vorgabe von mindestens acht Zeichen, davon sollen mindestens jeweils ein Groß- und ein Kleinbuchstabe, eine Ziffer und ein Sonderzeichen vorhanden sein. Die Zeichen Z1 - Z8 stammen dabei aus einem Zeichenvorrat oder Zeichensatz ZS1. Der Zeichensatz ZS1 kann zum Beispiel 72 Zeichen, also 26 Groß- und 26 Kleinbuchstaben sowie zehn Ziffern und zehn Sonderzeichen umfassen. Die Entropie eines zufälligen Passwortes PW mit acht Zeichen und einem solchen Zeichensatz ZS1 hat dann etwa 49 Bit. Dieser Wert ergibt sich aus der Berechnung log₁₀(72⁸)/log₁₀(2) ≈ 49.

Dieses Passwort PW ermöglicht einen Zugriff auf die Einrichtung 2 über die Netzwerkschnittstelle 3. Wird nämlich eine Zeichenfolge ZF1, die dem Passwort PW entspricht, eingekoppelt, gibt die Netzwerkschnittstelle 3 bzw. die entsprechende Steuereinrichtung 6 einen Zugriff auf ein oder mehrere Funktionen der Einrichtung 2 frei.

In einem zweiten Verfahrensschritt S2 wird aus dem Passwort PW unter Anwendung einer Abbildungsvorschrift AV ein Subpasswort SPW erzeugt. Dies ist ebenfalls in der Fig. 3 erläutert. Eine als Pfeil dargestellte Abbildungsvorschrift AV bildet die acht Zeichen Z1 - Z8 des Passwortes PW auf nur vier Zeichen Z1' - Z4' des Subpassworts SPW ab. Das Subpasswort SPW ist aus Zeichen gebildet, die einem Zeichensatz ZS2 entsprechen. Der Zeichensatz ZS2 hat dabei weniger Zeichen als der Zeichensatz ZS1 für das Passwort PW. In dem in der Fig. 3 dargestellten Beispiel bildet die Abbildungsvorschrift AV das achtstellige Passwort PW auf ein vierstelliges Subpasswort oder lokales Passwort SPW ab. Die sich für das lokale Passwort SPW ergebende Entropie ist dabei geringer als 14 Bit, sie hat ein geringeres Komplexitätsmaß.

Die Abbildungsvorschrift AV sieht vor, dass beispielsweise das Zeichen Z1 = D auf Z1' = 3 abgebildet wird. Das zweite Zeichen Z2 = i wird auf das zweite Zeichen Z2' = 4 abgebildet. Das dritte Zeichen Z3 = 1 wird auf das dritte Zeichen Z3' = 1 abgebildet, und das vierte Zeichen Z4 = % wird auf das vierte Zeichen Z4' = * abgebildet. Bei dem Beispiel für eine Abbildungsvorschrift AV der Fig. 3 werden nur die ersten vier Anfangszeichen Z1 - Z4 des Passworts PW zum Erzeugen des Subpassworts SPW benutzt. Dies hat den Vorteil, dass sich ein Benutzer, der in Kenntnis des Netzwerkpassworts PW ist, das lokale Passwort SPW leicht für sich ableiten kann und weniger Zeichen bei der Anmeldung an der lokalen Schnittstelle eingeben muss.

Mit Hilfe des lokalen Passworts SPW kann der Benutzer über die lokale Schnittstelle 4 des Zugriffssystems 1 unter Eingabe desselben als Zeichenfolge ZF2 Zugriff auf die Einrichtung 2 gewinnen. In dem als S3 bezeichneten dritten Verfahrensschritt (siehe Fig. 1) wird insofern eine jeweilige Zeichenfolge ZF1, ZF2 an die Netzwerkschnittstelle 3 oder die lokale Schnittstelle 4 eingekoppelt bzw. eingegeben. Die Steuereinrichtung 6 führt sodann einen Vergleich (Schritt S4) der jeweiligen eingekoppelten Zeichenfolge ZF1 mit dem Passwort bzw. ZF2 mit dem Subpasswort durch. Ergibt das Ergebnis des Vergleichs S4, dass die jeweilige eingegeben Zeichenfolge ZF1 bzw. ZF2 nicht dem Passwort PW bzw. dem Subpasswort SPW entspricht, wird ein Zugriff auf die Einrichtung 2 verweigert, siehe Schritt S5. Das Zugriffssystem 1 agiert sozusagen als Gate-Keeper oder Schloss.

Passwort PW und Subpasswort SPW können mit verschiedenen gebräuchlichen Maßnahmen gegen unbefugtes Auslesen geschützt werden, beispielsweise mit Beschränkung der Leseberechtigung des Speicherbereichs, durch Verschlüsselung mit einem in der Einrichtung vorhandenen Schlüssel, oder durch Speicherung in gehashter Form, vorzugsweise mit zusätzlichen Daten (salted hash). Da das Subpasswort SPW aufgrund seiner geringen Entropie von einem Angreifer leicht aus dem Hash des Subpassworts SPW rekonstruiert werden kann, und bei Kenntnis des SPW auch das Passwort PW leicht aus dem Hash des Passworts PW rekonstruiert werden kann, ist gegebenenfalls eine Speicherung in unabhängigen, getrennten Speichern 7,8 vorteilhaft.

Um die Eingabe des lokalen Passwortes bzw. Subpassworts SPW einfach zu gestalten, ist die lokale Schnittstelle als manuelle Eingabeschnittstelle in der Art einer Tastatur ausgestaltet, wie es beispielsweise in der Fig. 4 dargestellt ist. Die Fig. 4 zeigt eine mögliche Ausführungsform einer lokalen oder zweiten Schnittstelle 41. Die Fig. 4 zeigt dabei eine Tastatur mit zwölf Tasten, wobei nur eine mit dem Bezugszeichen 42 bezeichnet ist. Die in der Fig. 3 angedeutete Abbildungsvorschrift AV ist über die interne Belegung der Tastatur 41 mit jeweiligen Zeichen implementiert. Die Tastatur hat zwölf Tasten, die mit 1 - 9, *, 0 und # bezeichnet sind. Den Tasten mit den Ziffern 2 - 9 sind jeweils drei bzw. vier Buchstaben, wie in der Fig. 4 angedeutet, zugewiesen; der Taste * sind alle Sonderzeichen zugewiesen, Taste # kann die Eingabe abschließen. Für einen Benutzer ergibt sich beispielsweise an der lokalen Schnittstelle 4 die Möglichkeit, aus den ersten vier Stellen des ihm bekannten Passworts PW, nämlich di1%, die Tastenfolge 341* unter Anwendung der ihm bekannten Abbildungsvorschrift AV abzuleiten.

Es sind weitere neben der in der Fig. 4 dargestellten Abbildungsvorschrift AV, bei der nur einige Zeichen des Netzwerkpasswortes zur Ableitung des lokalen Passwortes verwendet werden, denkbar.

In einer anderen Variante werden bei der Abbildung des Netzwerkpasswortes PW auf das lokale Passwort SPW nur eine vorgegebene Anzahl von Zeichen am Anfang des Netzwerkpasswortes PW verwendet.

Es ist auch denkbar, dass Groß- und Kleinbuchstaben, beispielsweise d und D auf dasselbe Zeichen des Subpasswortes SPW abgebildet werden. Es können auch mehrere Buchstaben als Zeichen auf nur ein Zeichen abgebildet werden.

In einer weiteren Variante, wie sie auch in der Fig. 4 angedeutet ist, erfolgt eine Abbildung von jeweils mehreren Buchstaben auf eine Ziffer. Vorzugsweise ist insbesondere die als Schnittstelle 41 ausgestaltete lokale Schnittstelle mit einer Beschriftung versehen, die in der Art einer Abbildungstabelle die vielen Zeichen des Zeichensatzes ZS1 auf das jeweilige Zeichen des Zeichensatzes ZS2 für das lokale Passwort SPW abbildet. Bei der Implementierung der Abbildungsvorschrift AV sowie der Ausgestaltung der Schnittstelle 41 kann berücksichtigt werden, dass bestimmte Zeichen mit einer höheren Wahrscheinlichkeit in Passwörtern Verwendung finden als andere Zeichen.

Wird nun nach Eingabe der jeweiligen Zeichenfolge ZF1 bzw. ZF2 im Schritt S4 durch die Steuereinrichtung 6 erkannt, dass das korrekte Passwort PW bzw. Subpasswort SPW eingegeben wurde, wird der Zugriff auf die Einrichtung 2 im Schritt S6 freigegeben. Das heißt, der Benutzer kann die Einrichtung 2 bestimmungsgemäß gebrauchen. Beispielsweise wird dadurch auch der physikalische Zugriff zum Beispiel eines Türschlosses ermöglicht. Denkbar ist auch der Zugriff auf einen Computer lokal über die jeweilige Tastatur. Bei der Einrichtung kann es sich um Automatisierungseinrichtungen handeln. Denkbar ist der Einsatz eines entsprechenden Zugriffssystems 1 in Automatisierungsumgebungen oder Industrienetzwerken.

Obwohl die vorliegende Erfindung anhand von Ausführungsbeispielen beschrieben wurde, ist sie vielfältig modifizierbar. Insbesondere können andere als in den Ausführungsbeispielen genannte Abbildungsvorschriften eingesetzt werden. Die lokale Schnittstelle kann insbesondere auch ein lokal an einer Maschine installierter Touchscreen oder eine andere physisch zu bedienende Mensch-Maschine-Schnittstelle sein. Der Zugriff auf die jeweilige Einrichtung kann vollständig erfolgen, oder in Abhängigkeit von der gewählten Eingabeschnittstelle können eingeschränkte Funktionen oder Funktionalitäten freigegeben werden, auch wenn das jeweils richtige Passwort bzw. Subpasswort eingegeben ist. Insbesondere können auch verschiedene Passwörter bzw. Subpasswörter für unterschiedliche Anwender oder Berechtigungsstufen parallel verwendet werden. Insgesamt erleichtert das vorgeschlagene Verfahren die Nutzung von passwortgeschützten Einrichtungen.

## Patentansprüche

1. Verfahren zur Zugriffsverwaltung zu einer Einrichtung (2), welche eine erste und eine zweite Eingabeschnittstelle (3, 4) jeweils zum Einkoppeln einer Zeichenfolge (ZF1, ZF2) aufweist, umfassend:
Erzeugen (S1) eines Passworts (PW) mit einer vorgegebenen Mindestanzahl von Zeichen (Z1 - Z8) und insbesondere mit einem Komplexitätsmaß;
Erzeugen (S2) eines Subpassworts (SPW) in Abhängigkeit von dem erzeugten Passwort (PW) und einer vorgegebenen Abbildungsvorschrift (AV), wobei das Subpasswort (SPW) insbesondere ein geringeres Komplexitätsmaß hat als das Passwort (PW);
Freigeben (S6) eines Zugriffs auf die Einrichtung (2), falls eine über die erste Eingabeschnittstelle (3) eingekoppelte (S3) Zeichenfolge (ZF1) dem Passwort (PW) entspricht oder eine über die zweite Eingabeschnittstelle (4) eingekoppelte (S3) Zeichenfolge (ZF2) dem Subpasswort (SPW) entspricht.

2. Verfahren nach Anspruch 1,
**dadurch gekennzeichnet,**
**dass** das Passworts (PW) aus Zeichen eines ersten Zeichensatzes (ZS1) besteht und das Subpassworts (SPW) aus Zeichen eines zweiten Zeichensatzes (ZS2) besteht, wobei der erste Zeichensatz (ZS1) mehr Zeichen umfasst als der zweite Zeichensatz (ZS2).

3. Verfahren nach Anspruch 2,
**dadurch gekennzeichnet,**
**dass** die Abbildungsvorschrift (AV) mehrere Zeichen des ersten Zeichensatzes (ZS1) auf ein Zeichen des zweiten Zeichensatzes (ZS2) abbildet.

4. Verfahren nach einem der Ansprüche 1 - 3,
**dadurch gekennzeichnet,**
**dass** das die Abbildungsvorschrift (AV) nur eine Auswahl von Zeichen des Passworts (PW), insbesondere mindestens ein Zeichen am Anfang des Passworts (PW), berücksichtigt.

5. Verfahren nach einem der Ansprüche 1 - 4,
**dadurch gekennzeichnet,**
**dass** das die Zeichen des Subpassworts (SPW) eine Auswahl von Zeichen des Passworts (PW) sind.

6. Verfahren nach einem der Ansprüche 1 - 5,
**dadurch gekennzeichnet,**
**dass** das Passwort (PW) Groß- und Kleinbuchstaben als Zeichen enthält, wobei die Abbildungsvorschrift (AV) Groß- und Kleinbuchstaben eines selben Buchstabens auf ein Zeichen des Subpassworts (SPW) abbildet.

7. Verfahren nach Anspruch 6,
**dadurch gekennzeichnet,**
**dass** die Abbildungsvorschrift (AV) Groß- und Kleinbuchstaben eines selben Buchstabens auf den entsprechenden Buchstaben des Subpassworts (SPW) abbildet.

8. Verfahren nach einem der Ansprüche 1 - 7,
**dadurch gekennzeichnet,**
**dass** die erste Eingabeschnittstelle (3) für einen Fernzugriff, insbesondere eine Netzwerkschnittstelle, ist und die zweite Eingabeschnittstelle (4) für einen ausschließlich lokalen Zugriff, insbesondere eine Tastaturschnittstelle (41), ist.

9. Verfahren nach einem der Ansprüche 1 - 8,
**dadurch gekennzeichnet,**
**dass** die erste Eingabeschnittstelle (3) und die zweite Eingabeschnittstelle (4) für ein jeweiliges Paar eines Passworts (PW) und des zugehörigen Subpassworts (SPW) einen Zugriff auf eine selbe Funktion der Einrichtung (2) ermöglichen.

10. Verfahren nach einem der Ansprüche 1 - 9,
**dadurch gekennzeichnet,**
**dass** ein Speichern des Passworts (PW) und des Subpassworts (SPW) unabhängig voneinander, insbesondere in verschlüsselter oder gehashter Form, erfolgt.

11. Verfahren nach einem der Ansprüche 1 - 10,
**dadurch gekennzeichnet,**
**dass** ein Zugriff auf eine Funktion der Einrichtung (2) zum Ändern des Passworts (PW) ausschließlich über die erste Eingabeschnittstelle (3) erfolgt.

12. Zugriffssystem (1) für eine Einrichtung (2), welches umfasst:
eine erste Eingabeschnittstelle (3) zum Einkoppeln einer Zeichenfolge (ZF1) für einen Fernzugriff auf die Einrichtung (2) ;
eine zweite Eingabeschnittstelle (4) zum Einkoppeln einer Zeichenfolge (ZF2) für einen lokalen Zugriff auf die Einrichtung (2);
eine an die erste und zweite Eingabeschnittstelle (3, 4) gekoppelte Steuereinrichtung (6), welche eingerichtet ist, einen Zugriff auf die Einrichtung (2) freizugeben oder zu blockieren,
wobei ein Zugriff freigegeben wird, falls eine über die erste Eingabeschnittstelle (3) eingekoppelte Zeichenfolge (ZF1) einem vorgegebenen Passwort (PW) entspricht oder eine über die zweite Eingabeschnittstelle (4) eingekoppelte Zeichenfolge (ZF2) einem vorgegebenen Subpasswort (SPW) entspricht,
wobei das Subpasswort (SPW) von dem Passwort (PW) und einer vorgegebenen Abbildungsvorschrift (AV) abhängt, und
wobei das Subpasswort (SPW) ein geringeres Komplexitätsmaß hat als das Passwort (PW).

13. Zugriffssystem nach Anspruch 12,
**dadurch gekennzeichnet,**
**dass** das Zugriffssystem (1) eingerichtet ist, ein Verfahren nach einem der Ansprüche 1 - 11 durchzuführen.

14. Zugriffssystem nach Anspruch 11 oder 13,
**dadurch gekennzeichnet,**
**dass** der ersten Eingabeschnittstelle (1) eine erste Speichereinrichtung (7) zum Speichern des Passworts (PW) zugeordnet ist und der zweiten Eingabeschnittstelle (4) eine zweite Speichereinrichtung (8) zum Speichern des Subpassworts (SPW) zugeordnet ist, wobei die erste und die zweite Eingabeschnittstelle (3, 4) räumlich voneinander getrennt angeordnet sind.

15. Zugriffssystem nach einem der Ansprüche 12 - 14,
**dadurch gekennzeichnet,**
**dass** die erste Eingabeschnittstelle (3) eingerichtet ist, die Authentifizierung mit einem Authentifizierungsdienst, insbesondere einem Kerberos-Dienst, durchzuführen und die zweite Eingabeschnittstelle (4) eine manuelle Schnittstelle ist.
